# EUROPEAN PATENT APPLICATION

(11) **EP 1 901 032 A2**
(43) Date of publication of application: **19.03.2008**
(21) Application number: 07116231.7
(22) Date of filing: 12.09.2007
(51) Int. Cl.: G01B 11/24

(54) **System and method for image acquisition**

(30) Priority: 12.09.2006 US 843700 P; 15.11.2006 US 858998 P
(71) Applicant: Cognitens Ltd., 47282 Ramat Hasharon (IL)
(72) Inventor: Shalom, Tamir, 69395 Tel Aviv (IL); Albeck, Dan, 54034 Givat Shmuel (IL); Galatzer, Yishai, 79850 Neve Mivtach (IL); Brincat, Gary, 48382 Commerce Mi (US)
(74) Representative: Le Forestier, Eric

(57) **Abstract**

Systems and methods are provided for imaging and reconstructing topographical features of an object, in which an illumination system illuminates the object and images may be acquired by an image acquisition system, and wherein at least two components including the object, the illumination system, and the image acquisition system are mounted to or otherwise associated with independently controllable motion inducing mechanisms, in particular robotic arms, such as to enable at least two of the components to be independently moved, to provide optimum illumination and viewing conditions wherein to obtain image data. The image data is configured to enable topographical features of the object to be reconstructed.

## Description

### FIELD OF THE INVENTION

This invention relates to optically-based methods and systems for imaging objects, and in particular for topographical/dimensional measurement of objects. This invention also relates to illumination and imaging systems, in particular accessories therefor including background media associated therewith, and more particularly to such systems and media used in optically-based methods and systems for topographical/dimensional measurement of objects.

### BACKGROUND OF THE INVENTION

Optical measurements of features as well as of complete manufactured objects, for example automotive metal parts, plastic parts and so on, or indeed of natural objects, can be of great value in industry. Topographical including dimensional data of manufactured objects that may be of interest may include the size, location and shape of bores, edges and the like, for example.

Some machine vision systems utilize a static global illumination system for illuminating the full object, which may be uneconomical and inefficient for some applications.

Other machine vision systems utilize lights fixed onto and carried by the camera head for illuminating the particular area of the object that is being imaged by the camera.

Many industrially manufactured objects, such as automotive metal parts, plastic parts and so on typically vary in their optical reflectance properties, some being more reflective than others for a given incident beam intensity.

Machine vision systems often utilize different illuminations to illuminate objects during such optical measurements. In such systems comprising front illumination, i.e., illumination substantially on the same side of the object to be imaged as the camera, a particular background medium may sometimes be used with respect to the object, particularly when edge measurements of the object are of interest.

When attempting to generate an image of an edge-comprising part using some standard illumination systems, the edge reflectance characteristics of the part, which may include for example specular reflections, surface texture and other forms of optical interferences near the edge, can cause the edge or part thereof in the image to appear shifted relative to where the true mechanical edge of the part should appear in the image.

### SUMMARY OF THE INVENTION

The term "gain" herein includes the ratio of the reflectance of a surface of an object to the reflectance obtained from a standard white diffuser surface under the same illuminating conditions, and the ratio is often expressed in log scale.

The term "reflectance" refers to the ratio of radiant flux (total power emitted, received or passing in the form of electromagnetic radiation) reflected by a surface to the radiant flux falling on it. However, reflectance is often expressed as a percentage, i.e., the radiant flux reflected by a surface as a percentage of the radiant flux falling on it.

According to a first aspect of the invention, a system is provided for imaging, in particular for virtual reconstruction of topographical features of an object, comprising:
an image acquisition system for obtaining image data of at least one region of interest (ROI) of the object comprising said topographical features, said data being configured for enabling virtual reconstruction of said topographical features of said object;
an illumination system for illuminating at least said ROI;
wherein at least two of said image acquisition system, said illumination system and said object are independently controllably movable in a manner such as to provide a desired illumination to said ROI and to enable the ROI thus illuminated to be imaged in a desired manner; and
data processor for virtually reconstructing said topographical features based on said image data.

In some embodiments, the image acquisition system and the illumination system are each mounted for movement with respect to an independently controllable robotic arm or other motion inducing mechanism, capable of providing movement to the corresponding image devices or illumination sources, respectively, of the said image acquisition system and said illumination system, respectively, in up to six degrees of freedom.

In other embodiments, the image acquisition system and the object are each mounted for movement with respect to an independently controllable robotic arm or other motion inducing mechanism, each capable of providing movement to the corresponding image devices of the said image acquisition system and the object, respectively, in up to six degrees of freedom.

In yet other embodiments, the illumination system and the object are each mounted for movement with respect to an independently controllable robotic arm or other motion inducing mechanism, each capable of providing movement to the corresponding illumination sources of the said illumination system and the object, respectively, in up to six degrees of freedom.

In yet other embodiments, the object, the image acquisition system and the illumination system are each mounted for movement with respect to an independently controllable robotic arm or other motion inducing mechanism, each capable of providing movement to the corresponding object or image devices of the said image acquisition system or illumination sources of said illumination system, respectively, in up to six degrees of freedom.

The system according to the first aspect of the invention may comprise any one of or combination of the following features A to Q:
A. The system may comprise at least two suitable motion inducing mechanisms, each said motion inducing mechanism being adapted for independently controllably providing at least one of a displacement motion and a rotational motion for a different one of said at least two of said image acquisition system, said illumination system and said object.
B. Each said motion inducing mechanism may comprise a robotic arm comprising a corresponding one of said image acquisition system, said illumination system and said object mounted thereto, and further comprising a suitable controller for controlling the position and orientation of each said robotic arm.
C. The system may comprise at least two suitable robotic arms, each robotic arm being adapted for independently controllably providing at least one of a displacement motion and a rotational motion for a different one of said at least two of said image acquisition system, said illumination system and said object.
D. The controller may be further adapted for controlling operation of at least one of the or each one image capturing device and the or each one image illumination unit.
E. Each said robotic arm may provide movement in at least one translational degree of freedom and/or in at least one rotational degree of freedom.
F. Each said robotic arm may provide movement in at least two translational degrees of freedom and/or in at least two rotational degrees of freedom.
G. Each said robotic arm may comprise an operative end thereof configured to move to any point in space within a predetermined geometrical envelope in any suitable manner so as to avoid collision with another component of the system.
H. Each said robotic arm may provide movement in three translational degrees of freedom and/or in three rotational degrees of freedom.
I. The imaging system optionally provides suitable image data on which epipolar, triangulation or any other suitable image reconstruction technique may be applied to determine corresponding at least one of surface topography and dimensional data of the object.
J. In some embodiments, the illumination system comprises :
   a. a background medium, wherein the medium comprises a reflectance substantially greater than a reflectance of said ROI of the object at least in a vicinity of an edge comprised in said ROI when viewed along at least along an optical axis of said image acquisition system;
   b. the said image acquisition system comprising at least one image capturing device being disposed with respect to said medium such that said ROI including said edge are positioned intermediate between said at least one image capturing device and said medium;
   c. at least one illumination source for front illuminating at least a portion of said ROI including said edge and at least a portion of said medium proximate to said edge.
K. Optionally, the medium comprises a retro-reflective layer; further optionally the medium comprises a gain of greater than unity; further optionally, the medium comprises a gain of about 2 or greater than 2.
L. In some embodiments, the said background medium may be mounted on a controllable suitable motion inducing mechanism, for example a robotic arm optionally having any one or combination of features B to H above, *mutatis mutanids*, adapted for providing movement thereto in a desired number of degrees of freedom, and said at least one illumination source may be mounted on a different controllable suitable motion inducing mechanism, for example a robotic arm, adapted for providing movement thereto in a desired number of degrees of freedom.
M. In some embodiments, the background medium and said at least one illumination source may be mounted on a common controllable suitable motion inducing mechanism, for example a robotic arm optionally having any one or combination of features B to H above, *mutatis mutanids*, adapted for providing movement thereto in a desired number of degrees of freedom.
N. In some embodiments, the background medium is mounted on a controllable suitable motion inducing mechanism, for example a robotic arm optionally having any one or combination of features B to H above, *mutatis mutanids*, adapted for providing movement thereto in a desired number of degrees of freedom, and said at least one illumination source is mounted on said at least one image capturing device; optionally, the object may mounted on a another controllable suitable motion inducing mechanism, for example a robotic arm, adapted for providing movement thereto in a desired number of degrees of freedom, optionally having any one or combination of features B to H above, *mutatis mutanids*,.
O. In some embodiments:
   a. said background medium may be statically mounted;
   b. said object may be mounted on a first controllable suitable motion inducing mechanism, for example a robotic arm optionally having any one or combination of features B to H above, *mutatis mutanids*, adapted for providing movement thereto in a desired number of degrees of freedom;
   c. said at least one image capturing device may be mounted on a second controllable suitable motion inducing mechanism, for example a robotic arm optionally having any one or combination of features B to H above, *mutatis mutanids*, adapted for providing movement thereto in a desired number of degrees of freedom; and
   d. said at least one illumination source may be mounted on said at least one image capturing device.
P. In some embodiments, the background medium and said at least one illumination source may be statically mounted with respect to said device and to said image acquisition system.
Q. In some embodiments, the background medium comprises visually exposed surface and a plurality of alternative media comprised on actuable elements, wherein said elements may be actuated synchronously to selectively provide one or another of said alternative media on said surface. Optionally, said background medium may comprise any one of or combination of features according to the second aspect of the invention.

According to a variation of the first aspect of the invention, an imaging system is provided for imaging an object, comprising:
an image acquisition system for obtaining images of at least one region of interest (ROI) of the object;
an illumination system for illuminating at least said ROI;
   wherein at least two of:
   said image acquisition system, said illumination system and said object are independently controllably movable in a manner such as to provide a desired illumination to said ROI and to enable the ROI thus illuminated to be imaged in a desired manner.

In some embodiments, the imaging system comprises
said image acquisition system for obtaining images of at least one region of interest (ROI) of the object;
said illumination system for illuminating at least said ROI;
   wherein at least two of:
   said image acquisition system, said illumination system and said object are each independently controllably movable by means of at least two corresponding robotic arms, in a manner such as to provide a desired illumination to said ROI and to enable the ROI thus illuminated to be imaged in a desired manner, wherein each robotic arm provides the desired movement to a corresponding one of said image acquisition system, said illumination system and said object.

In particular embodiments, the image acquisition system, and the illumination system are each mounted onto separate and independently controllable robotic arms; in other embodiments the image acquisition system, and said object are each mounted onto separate and independently controllable robotic arms; in other embodiments said illumination system and said object are each mounted onto separate and independently controllable robotic arms; in other embodiments said illumination system, said image acquisition system and said object are each mounted onto separate and independently controllable robotic arms.

Optionally, the system according to this variation of the first aspect of the invention may comprise any one of or combination of the features A to Q listed above for the first aspect of the invention, *mutatis mutandis.*

Optionally, the imaging system may be adapted for providing image data configured for enabling virtual reconstruction of topographical features of said object.

According to said variation of the first aspect of the invention, an imaging method is provided for imaging an object, comprising:
(a) providing an image acquisition configured for obtaining images of at least one region of interest (ROI) of the object;
(b) providing an illumination system configured for illuminating at least said ROI;
(c) controllably moving at least two of said image acquisition system, said illumination system and said object in a manner such as to provide a desired illumination to said ROI and to enable the ROI thus illuminated to be imaged from a desired direction with respect thereto;
(d) providing said desired illumination and imaging said ROI thus illuminated to provide image data.

Optionally, step (c) may comprise providing movement in at least one or in at least two or in three translational degrees of freedom, and/or providing movement in at least one or in at least two or in three rotational degrees of freedom.

Optionally, the method further comprises the step of virtually reconstructing topographical features of said ROI based on said image data.

An analogous method is also provided for the first aspect of the invention, in which a reconstruction method is provided for virtual reconstruction of topographical features of an object, comprising, comprising:
(a) providing an image acquisition configured for obtaining images of at least one region of interest (ROI) of the object comprising said topographical features, said data being configured for enabling virtual reconstruction of said topographical features of said object;
(b) providing an illumination system configured for illuminating at least said ROI;
(c) controllably moving at least two of said image acquisition system, said illumination system and said object in a manner such as to provide a desired illumination to said ROI and to enable the ROI thus illuminated to be imaged from a desired direction with respect thereto;
(d) providing said desired illumination and imaging said ROI thus illuminated to provide image data; and
(e) virtually reconstructing said topographical features based on said image data.

Furthermore, the imaging system or the imaging method according to said variation of the first aspect of the invention, or the reconstruction method above according to the first aspect of the invention, may comprise any one or combination of features A to Q as listed above for the system according to the first aspect of the invention, *mutatis mutandis.*

A feature of at least some embodiments according to the first aspect of the invention or variation thereof is that regions of interest (ROI) of an object can be imaged in an optionally dynamic manner while being illuminated in one or more directions or axes different from the optical axis or axes of the device(s) of the image acquisition system, eliminating or minimizing specular reflection of the illumination radiation back to the image acquisition system, which may otherwise cause saturation of the image. Such saturation may in some cases cause an edge or part thereof in the image to appear shifted relative to where the true mechanical edge of the part should appear in the image.

Another feature of at least some embodiments according to the first aspect of the invention or variation thereof is that by providing an image acquisition system that is partially or fully mechanically de-coupled from the illumination system, this enables relatively large freedom of movement of the image acquisition system independently of the illumination system, while avoiding collision with the object, which could otherwise occur in some cases where the image acquisition system and the illumination system are mechanically coupled, and may thus present a relatively large imaging head.

According to at least some embodiments of the invention, systems and methods are provided for imaging and reconstructing topographical features of an object, in which an illumination system illuminates the object and images may be acquired by an image acquisition system, and wherein at least two components including the object, the illumination system, and the image acquisition system are mounted to or otherwise associated with independently controllable motion inducing mechanisms, in particular robotic arms, such as to enable at least two of the components to be independently moved, to provide optimum illumination and viewing conditions wherein to obtain image data. The image data is configured to enable topographical features of the object to be reconstructed.

According to a second aspect of the invention, a system is provided for imaging at least a region of interest (ROI) of an object including an edge, comprising:
a background system having a visually exposed surface,
an image acquisition system comprising at least one image capturing device being disposed with respect to said surface such that said ROI including said edge are positioned intermediate between said at least one image capturing device and said surface;
an illumination system comprising at least one illumination source for front illuminating at least a portion of said ROI including said edge and at least a portion of said visually exposed surface proximate to said edge;
wherein said background system comprises a visually exposed surface selectively constituting one of a plurality of interchangeable background surfaces, wherein each said background surface comprises a plurality of surface elements each of which may be reversibly moved between a first position
wherein the surface element is not comprised on said visually exposed surface, and a second position wherein the surface element is comprised on said visually exposed surface.

Optionally, the imaging system may be adapted for providing image data configured for enabling virtual reconstruction of topographical features of said object. Thus, in a variation of the second aspect of the invention, the invention is directed to a virtual reconstruction system, *mutatis mutandis.* Thus, this variation of the second aspect of the invention is directed to measurements relating to surfaces and/or free edges of such objects, especially where the objects are highly reflective and/or textured. Further, according to this variation of the second aspect of the invention, optical data relating to surfaces and/or edges of an object are provided, which may be used for reconstructing 3D surface structure of an object.

According to the second aspect of the invention, a background system is also provided for an illuminated object to be imaged with respect thereto, comprising a visually exposed surface selectively constituting one of a plurality of interchangeable background surfaces, wherein each said background surface comprises a plurality of surface elements each of which may be reversibly moved between a first position the surface element is not comprised on said visually exposed surface, and a second position wherein the surface element is comprised on said visually exposed surface.

The background system according to the second aspect of the invention, by itself or in comprised in said imaging system or said reconstruction system, may comprise any one of or suitable combination of the following features:
- In some embodiments, the background system may comprise a plurality of rotatable elements, each comprising a plurality of facets corresponding to said plurality of background surfaces, wherein each said facet of each said rotatable element comprises a said surface element corresponding to one or another of said background surfaces, wherein said rotatable elements may be selectively rotated such as to alternately align said facets comprising said surface elements of one or another of said background surfaces wherein to form a generally continuous surface constituting said visually exposed surface.
- Optionally, the rotatable elements may be prismatic elements, having two or three surfaces that may alternately form said visually exposed surface when aligned.
- Optionally, each of the said background surfaces may comprise a different reflectance with respect to one another. Further optionally, the background surfaces may comprise suitable reflective, semi reflective or matte background surfaces.
- Optionally, the rotatable elements comprise corresponding rotating axes that are aligned in a common plane or along a common curved surface.
- Optionally the said facets may be substantially planar or curved.

Thus, according to the second aspect of the invention, a background system is provided enabling a user to selectively change the background surface in situ. According to some embodiments, the background system may be placed behind the object as an optical background. A suitable front illumination system, typically adjacent to the camera(s) or other imaging system may be used to illuminate the object and the background surface. The background device allows the user to choose between a plurality of different backgrounds with respect to the object without having to disrupt the illumination system, imaging system or the object.

Thus, at least two different optical backgrounds may be provided for imaging with the object. Optionally, two or more such background devices may be provided,
wherein each said device is positioned such that the object is aligned between one such device and least one image capturing device.

A feature of the second aspect of the present invention is that by co-rotating the rotatable elements, each one of at least three alternative such surfaces may be selectively presented as background surfaces for the object O without the need to physically remove a background and replace it with another. Accordingly, this makes possible optimally matching the most appropriate of these surfaces to the object or parts thereof as required in a simple and fast manner. For example, if the object has a highly reflective surface and a non reflective surface, when imaging the former a dull or matte background surface may be preferable, while when imaging the latter, a different background may be preferred.

### BRIEF DESCRIPTION OF THE DRAWINGS

In order to understand the invention and to see how it may be carried out in practice, embodiments will now be described, by way of non-limiting example only, with reference to the accompanying drawings, in which:
**Fig. 1** is a schematic illustration including the main elements of a system according to a first embodiment of the invention.
**Fig. 2** is a schematic illustration of an image acquisition system of the system of the embodiment of Fig. 1.
**Fig. 3** is a variation of the embodiment of Fig. 1, comprising an alternative illumination system.
**Fig. 4** is a schematic illustration including the main elements of a system according to a second embodiment of the invention.
**Fig. 5** is a variation of the embodiment of Fig. 4, comprising an alternative illumination system.
**Fig. 6** is a schematic illustration including the main elements of a system according to a third embodiment of the invention.
**Fig. 7** is a variation of the embodiment of Fig. 6, comprising an alternative illumination system.
**Fig. 8** is a schematic illustration including the main elements of a system according to a fourth embodiment of the invention.
**Fig. 9** is a fragmented isometric view of a background device according to an embodiment of the invention. **Fig. 9a** illustrates a variation of the embodiment of Fig. 9.
**Fig. 10** is a schematic representation of the main elements of a generalized optical system according to one embodiment of the invention comprising the background device of Fig. 9.
**Fig. 11** is a fragmented isometric view of a background device according to another embodiment of the invention.

### DETAILED DESCRIPTION OF EMBODIMENTS

In the present invention, the term "object" includes any two dimensional object or any three dimensional obj ect, or a collection of two dimensional or three dimensional objects including a scene.

Dimensional data is taken herein to refer to any topographical data relating to an object, which in particular is understood herein to include any geometrical data relating to location, size and shape with respect to surfaces or edges, including internal and external surface and edges, surface geometry, or other features of an object that are capable of being imaged.

Thus, the object to be imaged, generally designated herein as **O** with reference to the figures, according to the invention can comprise any mechanical or other physical object, including a scene, that it is desired to determine dimensional data, such as for example surface data or edge data, thereof. The object **O** may comprise for example surfaces, edges and/or other features that may be substantially three-dimensional, for example fabricated automotive parts such as die-pressed door or body panels. Alternatively the object **O** may comprise surfaces and edges that may be considered "two-dimensional", comprising, for example, a thin metal sheet having a particular plan form, which may be useful in quality control of the shape of blanks before being pressed in dies or the like. Of particular interest may be the location and/or size and/or shape of free edges, internal or external, bores, holes, bosses, journals, and so on.

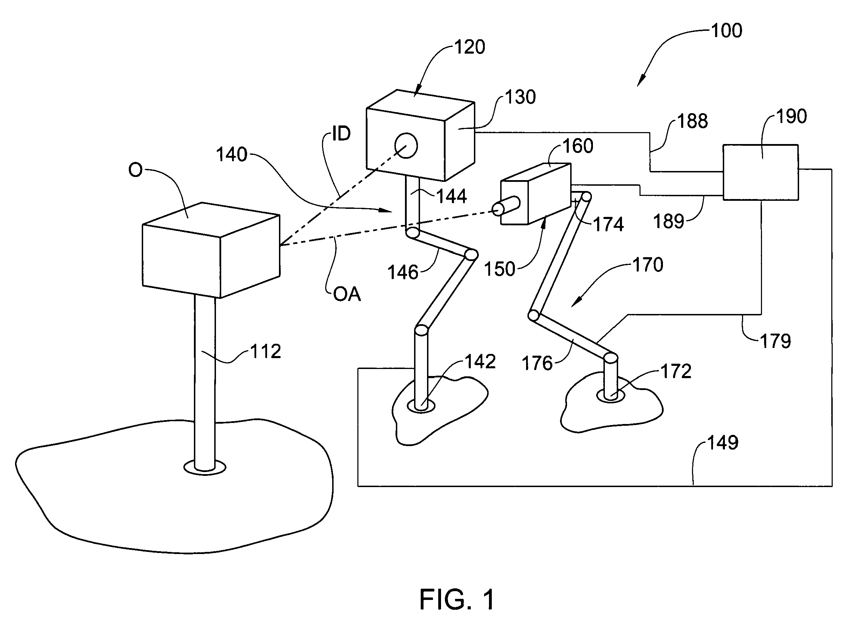

According to a first aspect of the invention, and referring to Fig. **1,** a system for imaging an object **O** and providing dimensional data according to a first embodiment of the invention, generally designated **100,** comprises an image acquisition system **150** and an illumination system **120,** for imaging an illuminated object **O.**

The image acquisition system **150** comprises at least one image capturing device **160** mounted on a robotic arm **170.** Each image capturing device **160** (only one such unit is illustrated in Fig. **1)** comprises one or more suitable imaging devices or systems, which can transmit an image electronically to a controller **190,** which comprises a suitable microprocessor means or the like. For example, the capturing devices **160** may include one or more suitable cameras, including for example a video camera or any CCD- or CMOS-based camera, and the microprocessor means may include, for example, a suitable computer, the electronic image being obtained via an image grabber, for example. In particular, each image capturing device **160** may be configured for providing image data from an object **O** being imaged, such as to enable the surface topography or other dimensional data, including for example location, size and shape of recesses or protrusions, for example bores and the like, to be determined from the image data, via the controller **190** or any other suitable microprocessor. Accordingly, and by way of non-limiting example, the image capturing device **160** may provide such image data on which epipolar-based reconstruction techniques, triangulation-based reconstruction techniques or any other known image-based reconstruction techniques may be applied to determine corresponding surface topography or other dimensional data of the object. Such image reconstruction techniques are well known in the art and will not be described further herein.

The robotic arm **170** comprises a controllable mechanism for providing translations and/or rotations of a part thereof in up to five or six degrees of freedom, the part being a part of the arm onto which a desired component may be fixed or otherwise mounted, temporarily or permanently, thereby enabling the movements of the component in said up to five or six degrees of freedom. In this embodiment, the robotic arm **170** comprises a fixed base **172,** fixedly mounted to a static structure such as a floor, wall, ceiling, fixed struts, and so on, or optionally to a movable structure, such as for example a trolley or gantry. The robotic arm **170** further comprises a mounting bracket **174** or gripper, i.e. a clamp or any other mechanism for gripping, clamping and so on, with respect to which the corresponding image capturing device **160** is mounted, or otherwise secured with respect thereto, optionally reversibly. A plurality of articulated links **176** are provided between the mounting bracket **174** and the base **172,** in a manner enabling the bracket **174,** and thus the corresponding image capturing device **160,** to translate and rotate in five or six degrees of freedom in a controlled manner.

Alternatively, rather than a plurality of articulated links, the robotic arm may comprise a flexible shaft including a plurality of steering wires coupled to steering drives, and suitably connected to the flexible shaft to enable the free, operative end of the shaft (which comprises the mounting bracket or gripper) to be moved in any desired manner, for example as are used for steering endoscopes and the like, mutatis mutandis.

Such robotic arms having articulated links or endoscope type steering mechanisms are well known in the art and will not be described in any further detail herein.

Thus, the arm **170** may comprise a plurality of servomotors, controllers and so on, as is known in the art for providing such movement. The robotic arm **170** is operatively connected to, and/or comprises, a suitable power source (not shown).

Further, the arm **170** may also comprise position sensors or the like to provide positional data, or to enable such data to be determined, for the bracket **174,** and thus for the corresponding image capturing device **160.** Thus, the particular trajectory and specific positions and orientations of the image capturing device **160,** even if set manually the first time that the system 100 is operated, may be stored by the controller, and this enables the same trajectory and specific positions and orientations of the image capturing device **160** to be repeated as often as required.

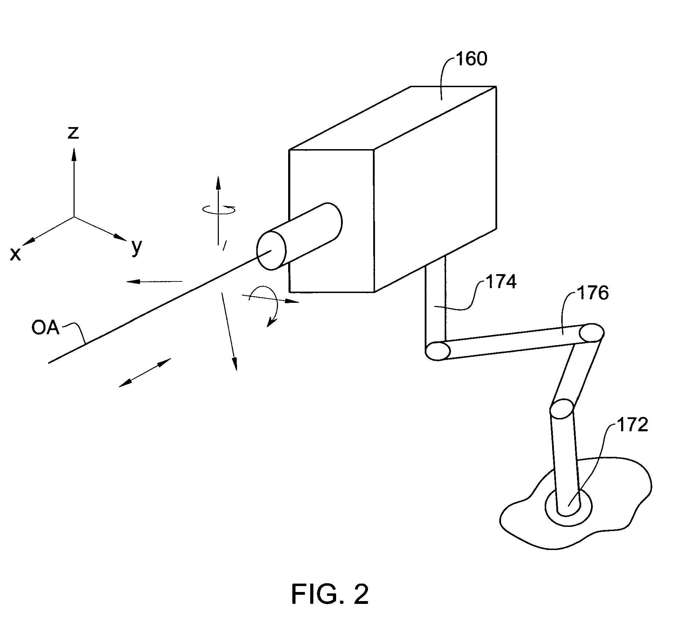

Referring to Fig. **2,** the aforementioned degrees of freedom may include translations along one, two or three of the three orthogonal axes, x, y, z with respect to the corresponding image capturing device **160,** in particular the optical axis OA thereof (which in this figure is set to be substantially parallel to the x-axis), and/or rotation about one, two or three of the x, z and y axes for example, which effectively enable to provide movement in up to all six degrees of freedom. The robotic arms provide flexibility to achieve any desired position and orientation of the image capturing device **160,** enabling to reach, position and orient the device at any point in space. The degrees of freedom, in particular the number of axes of movement, their arrangement and sequence of operation, enable the device at the free end of the robotic arm, i.e., the operative end of the robotic arm, to move to any point in space within a predetermined geometrical envelope, in any suitable manner so as to avoid collision with another component of the system, including another robotic arm in particular onto which another component of the system may be mounted, for example the object **O** and/or the illumination system **120.**

In other embodiments of the invention, the robotic arm may be configured for providing translations and/or rotations in less than five degrees of freedom, according to the particular application of the system **100.** For example, in some applications of the system **100,** it may only be necessary to translate the image capturing device **160** along one direction, and/or to rotate it along one axis in order to cover all the ROI's of an object.

The robotic arm **170** is operatively connected to a controller **190** via line **179.** The controller **190** is configured for controlling the movement of the arm **170** in up to six degrees of freedom, and thus of the corresponding image capturing device **160,** according to preset conditions, as will become clearer below. Line **179** may be a physical line such as for example a fiber optic line, electric or electronic cable, and so on, and/or may include any other data or signal communication link, for example a suitable wireless connection between the robotic arm **170** and the controller **190,** including suitable data transmitters and receivers, for example.

The illumination system **120** comprises at least one image illumination unit **130** mounted on a second robotic arm **140.**

The illumination unit **130** is operatively connected to the controller **190** or to a different controller (not shown) via line **188,** which may include any suitable communication link, enabling operation of the illumination unit **130,** including switching the same on and off, optionally controlling intensity of illumination, as well as operation of particular illumination elements of the illumination unit **130,** where appropriate. The controller **190** may also be optionally configured to control the illumination source in a manner such as to synchronize illumination of the object with the image taking process by means of the image acquisition system **150,** for example as disclosed in WO 2006/080023, assigned to the present assignee; the contents of WO 2006/080023 are incorporated herein in their entirety.

Each illumination unit **130** (only one such unit is illustrated in Fig. **1)** comprises at least one illumination element, including for example one or more light sources, each of which may comprise any suitable illumination means, typically a suitable projector or light emitter, further typically illuminating in white light, but optionally capable of illuminating the object in any other wavelength in the visible spectrum, or indeed outside of the visible spectrum including infra red and ultraviolet wavelengths, for example, projected along at least one illumination direction **ID.** The illumination unit **130** may be configured for illuminating the object **O** directly or indirectly. The illumination unit **130** may comprise, for example, suitable discharge lamps, LED's, lasers and so on, or any suitable spatial light modulator (SLM) operatively connected to a control module, which may be comprised, optionally, in controller **190.**

The robotic arm **140** may be substantially similar to the first robotic arm **170** as described herein, including all the variations and features thereof, mutatis mutandis. Thus, the robotic arm **140** comprises a fixed base **142,** fixedly mounted to a static or movable structure, a mounting bracket **144** or gripper, with respect to which the corresponding illumination unit **130** is mounted, optionally reversibly, and a plurality of controllable articulated links **146** between the mounting bracket **144** and the base **142,** for providing five or six degrees of movement, or less than five degrees of movement, controlled by controller **190** via control line **149** or by a different controller. The robotic arm **140** is operatively connected to and/or comprises a suitable power source (not shown).

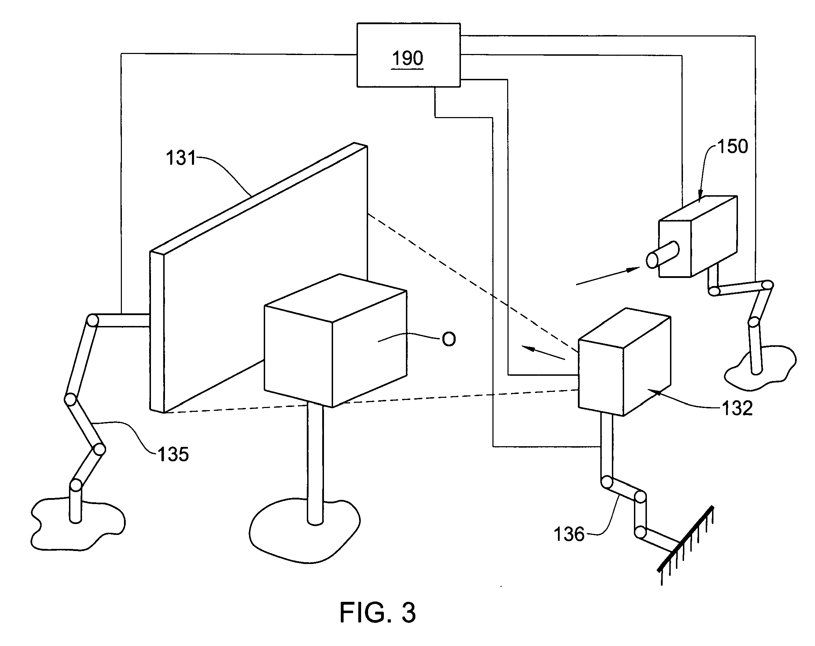

Optionally, and as may be the case for other embodiments of the invention as well, mutatis mutandis, the illumination unit **130** may comprise a light reflecting medium **131** and an illumination source **132,** as illustrated in Fig. **3,** for example. The object **O** may be placed in front of the medium **131** and arranged such that it is located between the medium **131** and the illumination source **132,** and also between medium **131** and the image capturing device **160.** In particular, the illumination source **132** is spatially arranged with respect to the object **O** and medium **131,** such that, at least during operation of the system **100,** the object **O,** or at least a region of interest (ROI) comprising a portion of the surface thereof having internal and/or external edges, and a part of the medium **131** surrounding the object's edges are illuminated by the source **132.** The light reflecting medium **131** is characterized in having a high reflectivity or gain, particularly relative to the reflectivity or gain of the object **O,** in particular the part of the surface thereof including the aforementioned edges. In some embodiments, the medium **131** may comprise a suitable retro-reflective surface.

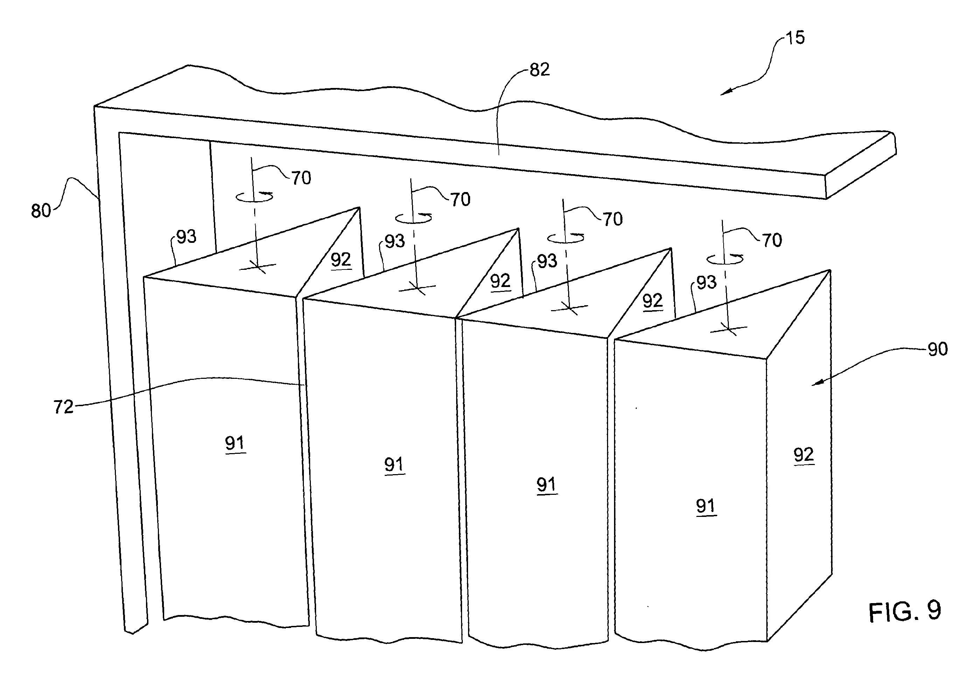

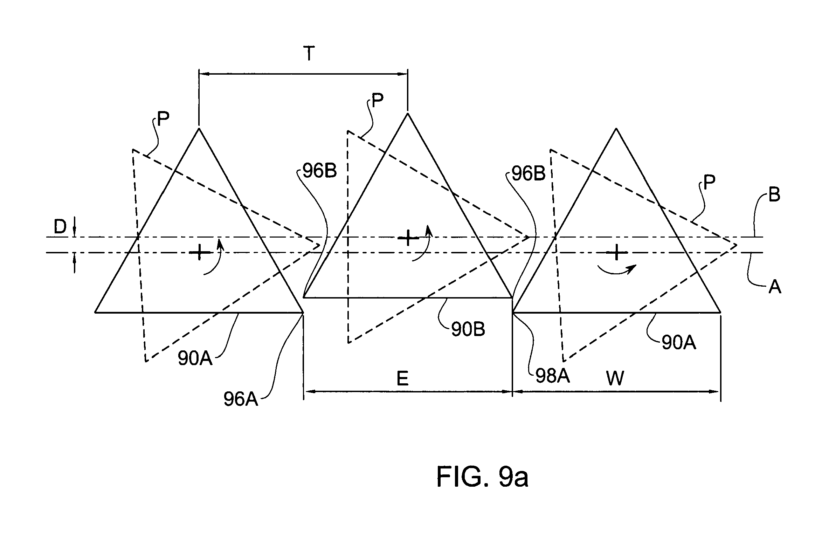

Alternatively, the light reflective medium may comprise a background device that is configured for selectively presenting one of a number of alternative optical media at a time to face one or more of the object **O,** illumination system **120,** and optical image acquisition system **150.** Each of the alternative media may comprise different light reflection properties. Such a background device may comprise, for example, the dynamic background device as disclosed herein according to a second aspect of the invention and illustrated in Figs. 9 to 11, mutatis mutandis.

A "retro-reflective surface" herein refers to a surface which bounces incident light back towards the source of the light, in other words, a light beam that has a certain incidence angle with respect to the layer will exit the layer at approximately the same angle back to the illumination source. Such retro-reflective surfaces are well known and may be formed, for example, using spherical reflective beads, or the like, and compositions of retro-reflective layers and methods for their production are disclosed in US Patent Nos. 2,432,928, 2,440,584, 2,543,800, 2,397,702, 4,104,102, for example, the contents of which are incorporated herein in their entirety by reference. Retro-reflective surfaces typically provide a gain of more than 2.

In the embodiment illustrated in Fig. **3,** the light reflecting medium **131,** which optionally may comprise a dynamic background device according to the second aspect of the invention, and the illumination source **132** are each mounted on suitable robotic arms, **135, 136,** respectively, each of which may be similar to the robotic arm **170** as described herein, mutatis mutandis, for example. Alternatively, both light reflecting medium **131** and the illumination source **132** may be mounted in a particular spatial relationship onto the same robotic arm, wherein this spatial relationship may be fixed, or may be varied, at least with respect to one degree of freedom - for example the relative distance between the light reflecting medium **131** and the illumination source **132** may be selectively varied. Alternatively, the light reflecting medium **131** may be mounted onto a robotic arm, and the illumination source **132** may be statically mounted. Alternatively, the light reflecting medium **131** may be statically mounted, and the illumination source **132** may be mounted to a robotic arm.

Referring back to Fig. **1,** in operation of the system **100,** the image acquisition system **150** and illumination system **120** are configured for illuminating an imaging at least one part or region of interest (ROI) of an object **O.** The object **O** may be mounted for convenience on a stand **112,** or to a mounting block, clamps, table or any other suitable device or structure, preferably such that the spatial position and orientation of object **O** may be fixed and knowable, particularly with respect to the position and orientation of the illuminating system **120** and imaging system **150,** and preferably also such that the spatial position and orientation is repeatable. For each ROI, the optimum position(s) and orientation(s) of the image acquisition system **150,** and of the illumination system **120,** may be determined to enable the clearest image data of the ROI to be obtained, which may the subject of subsequent analysis to provide surface data of the ROI therefrom, for example. Such optimum position(s) and orientation(s) for the of the image acquisition system **150,** and of the illumination system **120** may vary according to the particular ROI being imaged, and for some ROI may require the image acquisition system **150** to obtain image data from one or a number of positions, while the illumination system **120** may remain statically positioned with respect to the object **O,** or alternatively may also be moved in a particular manner.

Such optimal position(s) and orientation(s) for the of the image acquisition system **150** may in general depend on the nature of the ROI itself, or may be preset for example, according to criteria, for example.

The criteria for optimally positioning and/or orienting the illumination system **120** may be similar to or different from those for the image acquisition system **150.** In particular, the illumination provided by the illumination system **120** to an ROI may be optimized such that for each image acquisition position/orientation of the image acquisition system **150** with respect to an ROI of the object **O,** the illumination system **120** provides maximum uniformity and intensity of illumination for every part of the ROI being imaged, minimizing shadows and/or high contrast between different parts of the ROI. Again, in general, the position and orientation of the illumination system **120** may be coupled to the position and/or orientation of the image acquisition system **150** at any particular ROI, and may in general depend on the nature of the ROI itself, or may be preset for example, according to criteria, for example. This coupling, though, is non-mechanical, and the robotic arms **140** and **170** may move independently one from the other. Rather, this coupling refers, in some embodiments, to controlling the movement of both robotic arms **140** and **170** such that they maintain a particular spatial relationship or follow a particular variation in spatial relationship, according to the particular application of the system **100.**

By way of example, for ROI's relating to substantially planar features such as for example planar walls, trimmed sheet metal, edges, and the like it may be sufficient to have an optical axis of the image acquisition system **150** generally perpendicular to the ROI, and spaced therefrom so that the field of view thereof encompasses the ROI. If the ROI is relatively large, better resolution may be obtained by providing a plurality of sets of image data taken successively from adjacent parts of the ROI, each of which may be considered as an ROI, and the data subsequently stitched. The illumination provided by the illumination system **120** may be such as to provide an illumination direction to illuminate the ROI such as to optimize the illumination, and to minimize specular reflection, for example. On the other hand, where the ROI is a highly complex three-dimensional shape, the image acquisition system **150** may be positioned and/or oriented in a variety of positions relative to the ROI to obtain sufficient cover therefore, and the illumination system **120** provides illumination in a suitable manner to avoid or minimize specular reflection of the illumination to the image acquisition system, and avoid or minimize saturation of the image. Optionally, this may be determined in a theoretical manner for each ROI. For example, optimal methods for imaging and illuminating standard shapes, for example cubes, cylinders, spheres, etc, may be derived from basic concepts in physics relating to optical reflection, for example. Alternatively, the optimal relative positions of the image acquisition system **150** and the illumination system **120** may be determined in an empirical manner, e.g. by trial and error. Alternatively, any suitable combination of theoretical and empirical methods may be used.

Alternatively, the image acquisition system **150** may be preset to obtain image data at spaced angular intervals in azimuth and elevation around the object **O,** according to any polar or other coordinate system, and the illumination system **120** provides illumination in an appropriate manner, assuming an appropriate spatial configuration, i.e., position and orientation, relative to the image acquisition system **150** and the object **O,** by independently operating and moving the robotic arm **140.** Alternatively, the image acquisition system **150** may be preset to obtain image data according to predetermined criteria.

Control of the position and/or orientation of the image acquisition system **150** and/or of the illumination system **120** may be provided by the controller **190** via lines **179** and **149,** respectively, for example in an automated manner. In variations of this embodiment wherein one or more of the image acquisition system **150,** illumination system **120,** robotic arm **170,** robotic arm **140** may be controlled by separate controllers, such controllers may optionally be operatively connected so as to coordinate the operations thereof

Image data obtained by the image acquisition system **150** may be transmitted to the controller **190,** for example via line **189,** or indeed any other suitable data analysis and manipulation system, for analysis and manipulation as required, to provide the desired dimensional data, including for example surface or edge data, or other geometrical data relating to the object **O.**

In other embodiments of the invention, the robotic arms for the imaging system and/or for the illumination system may be replaced with other controllable suitable motion-inducing mechanisms adapted for providing movement in a desired number of degrees of freedom, optionally including suitable translation and/or rotation systems, for example a suitable gantry system. However, while gantry systems and the like may provide movement with up to 6 degrees of freedom, robotic arms also have the feature of not requiring a relative large frame and rails, which can otherwise sometimes collide with the object, image acquisition devices or illumination sources, or indeed similar components of the second (and/or third) motion inducing mechanisms when these are also gantries. Robotic arms may be configured for enabling the particular component mounted or otherwise associated therewith - the image acquisition system, the illumination system or the object - to be moved in three dimensional space in a manner that may in general prevent collision with other components or robotic arms of the system 100 when the sequence of movements of the robotic arm is properly coordinated.

The system **100** may be operated in a number of different ways, and some non-limiting examples thereof will now be described.

### Example 1- inspection of a series of nominally identical objects

In such an example the general topography of the nominal object may be known, for example from a CAD model of the object.

The controller **190,** or other suitable computer, may first divide the CAD model or datum, in a virtual sense, i.e., within the computer environment, into a plurality of ROI's such as for example to minimize the number of different images that may be required to be taken, and to minimize the number of different movements required for the image acquisition system and/or the illumination system, to provide a series of coordinated instructions for moving the image acquisition system **150** and illumination system **120** with respect to a known position and orientation of the object with respect to the stand **112.**

Then, each object of the series of objects is in turn placed on the stand **112** in a known datum position and orientation, and the image acquisition system **150** and illumination system **120** are operated according to the series of coordinated instructions. The image data obtained may then be processed by the controller **190** to provide desired surface data of the particular object being imaged. Optionally, the surface data at each ROI may be compared with nominal data, and deviations therefrom determined and provided in a suitable manner, for example as disclosed in WO 2005/010627, assigned to the present assignee and the contents of which are incorporated herein in their entirety. Further optionally, the controller **190** may be configured for automatically alerting a user whenever the surface data for a particular ROI differs from the corresponding nominal data beyond a preset threshold. For example, if the object is a manufactured item such as a car door, for example, having a plurality of bores, an alert may be generated by the system **100** if the radius and/or position of each bore in the particular item being imaged is off with respect to the nominal radius and/or center, respectively, of the CAD model or datum model.

Alternatively, there may be cases in which it may be desired to check various ROI's in relation to each other, for each of the series of objects, against a nominal relative position and/or size and/or shape of the ROI's, without reference to a CAD model, and the procedure may be similar to that described above in this example, mutatis mutandis.

### Example 2 - inspection of a new object having identifiable features

The controller **190** may optionally be programmed with preset relative positional and orientation settings of the image acquisition system **150** and illumination system **120** with respect to certain standard topographic features, for example bores, planes and so on. When a new object is being inspected by the system **100** for the first time, the object may be mounted to the stand **112,** and the imaging system **150** may be manually brought into proximity with features thereof that may correspond topographically to such as those contained in the controller memory. The user can then indicate, via a suitable interface such as a keyboard and screen, and software operating drop down menus, for example, the type of feature being scanned, and the controller then brings the illumination system **120** into the appropriate position with respect to the imaging system **150** for that feature.

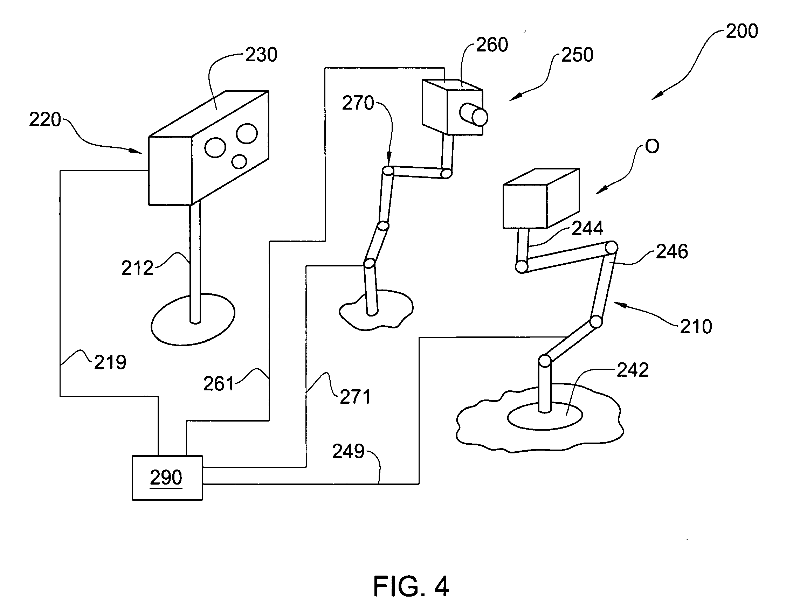

Referring to Fig. **4,** a second embodiment of the system for imaging an object **O** and providing dimensional data according to the invention, designated with numeral **200,** comprises all the elements and features and variations thereof of the first embodiment as disclosed herein, mutatis mutandis, with the following differences. In this embodiment, the system **200** comprises an image acquisition system **250,** an illumination system **220,** and a mechanism **210** for displacing and/or rotating an object **O.**

The image acquisition system **250** comprises all the features as described herein for the image acquisition system **150** first embodiment, mutatis mutandis, and thus comprises at least one image capturing device **260** mounted on a robotic arm **270,** similar to the corresponding elements described for the first embodiment, *mutatis mutandis.* The system **200** further comprises controller **290,** for example similar to the controller **190** described for the first embodiment, *mutatis mutandis,* which controls operation of the robotic arm **270** and of the image capturing device **260** via lines **271, 261,** respectively.

The illumination system **220** comprises at least one image illumination unit **230** as described for the image illumination unit **130** of first embodiment, mutatis mutandis, but in contrast to the first embodiment, rather than being mounted to an independently movable robotic arm, the illumination unit **230** is statically mounted, or mounted for movement with the image acquisition system. For example, the illumination unit **230** may be mounted on a stand **212,** or to a mounting block, clamps, table or any other suitable device or structure, preferably such that the position and orientation of illumination unit **230** may be fixed and knowable.

Alternatively, and for example for some variations of this embodiment in which the illumination system **220** comprises a light reflecting medium and an illumination source analogous to the components illustrated and disclosed with reference to Fig. 3 for the first embodiment, in the second embodiment the light reflecting medium and illumination source would both be mounted to the same stand or to different stands, or other mounting block(s), clamp(s), table(s) or any other suitable device(s) or structure(s).

The illumination unit **230** is operatively connected to controller **290** (or optionally to a different, suitable controller) via line **219,** and controller **290** controls operation of the illumination unit **230** in a similar to that described for the first embodiment mutatis mutandis.

The object **O** is mounted onto said mechanism **210,** which comprises a robotic arm substantially similar to the robotic arm **170** as described herein for the first embodiment, including all the variations and features thereof, mutatis mutandis. Thus, the mechanism **210** comprises a fixed base **242,** fixedly mounted to a static structure, a mounting bracket **244** or gripper, for reversibly mounting the object **O** thereto, and a plurality of controllable articulated links **246** between the mounting bracket **244** and the base **242,** for providing five or six degrees of movement, or less than five degrees of movement, controlled by controller **290** (or optionally to a different, suitable controller) via control line **249.**

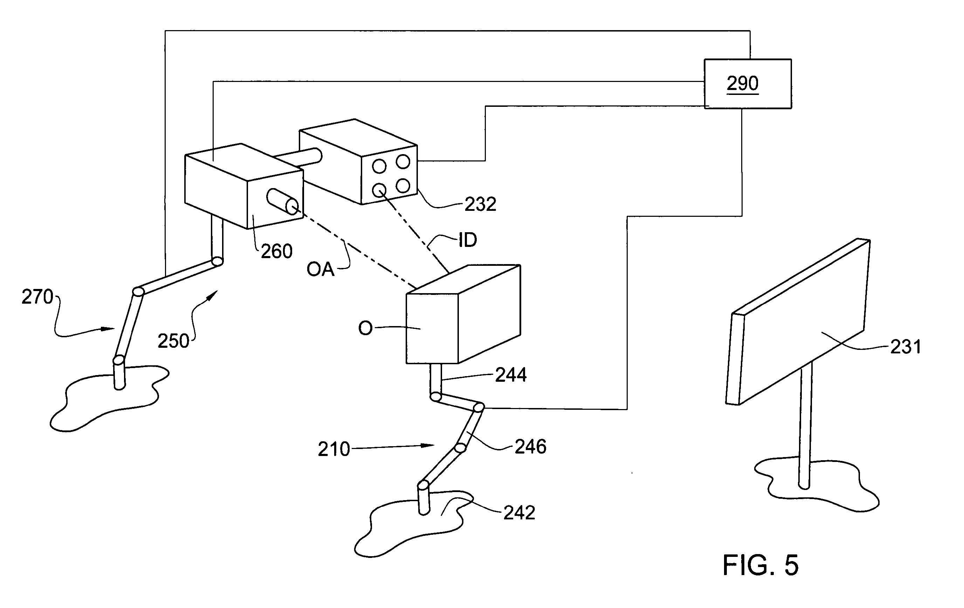

Alternatively, and referring to Fig. 5, one or more light reflecting medium **231** may be provided, statically mounted where desired, and the illumination source **232** may be mounted to the image capturing device **260** for movement therewith. In this case, even if the illumination direction **ID** from the illumination source is parallel or closely aligned with the optical axis or axes **OA** of the image capturing device **260,** the spatial relationship of the illumination source and the image capturing device 260, as well as of the object **O,** with respect to reflecting medium may be controlled such as to provide optimum illumination of the ROI being imaged, in particular edges thereof, while preventing specular reflection towards the image capturing device **260.**

Operation of the system **200** is similar to that of system **100,** mutatis mutandis, the main difference being that while in the first embodiment, the illumination system and the image acquisition system are moved, while the object remains stationary, in the second embodiment the image acquisition system and the object may be independently moved, while the illumination system remains stationary or part thereof is mechanically coupled to the image acquisition system, mutatis mutandis.

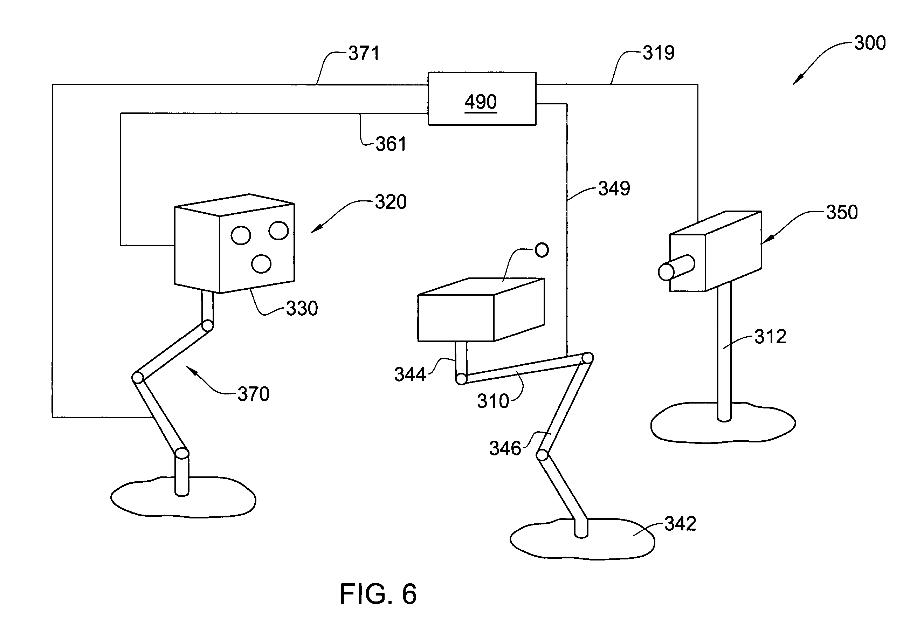

Referring to Fig. **6,** a third embodiment of the system for imaging an object **O** and providing dimensional data according to the invention, designated with numeral **300,** comprises all the elements and features of the first and second embodiments and variations thereof disclosed herein, mutatis mutandis, with the following differences. In this embodiment, the system **300** comprises an image acquisition system **350,** an illumination system **320,** and a mechanism **310** for displacing and/or rotating an object **O.**

The image acquisition system **350** comprises all the features as described herein for the image acquisition system **150** or **250** of the first or second embodiments, mutatis mutandis, but in contrast to the first or embodiments, rather than being mounted to a movable robotic arm, the image acquisition system **350** is mounted on a stand **312,** or to a mounting block, clamps, table or any other suitable device or structure, preferably such that the position and orientation of image acquisition system **350** may be fixed and knowable. The image acquisition system **350** is operatively connected to controller **390** (or optionally to a different, suitable controller) via line **319,** and controller **390** controls operation of the image acquisition system **350** in a similar to that described for the first and second embodiments mutatis mutandis.

The illumination system **320** comprises at least one image illumination unit **330** as described for the image illumination unit **130** of first embodiment, mutatis mutandis, mounted on a robotic arm **370,** similar to the corresponding elements described for the first embodiment, *mutatis mutandis.* The controller **390** may be similar to the controller **190** or **290** described for the first and second embodiments, mutatis mutandis, which controls operation of the robotic arm **370** and of the illumination unit **330** via lines **371, 361,** respectively.

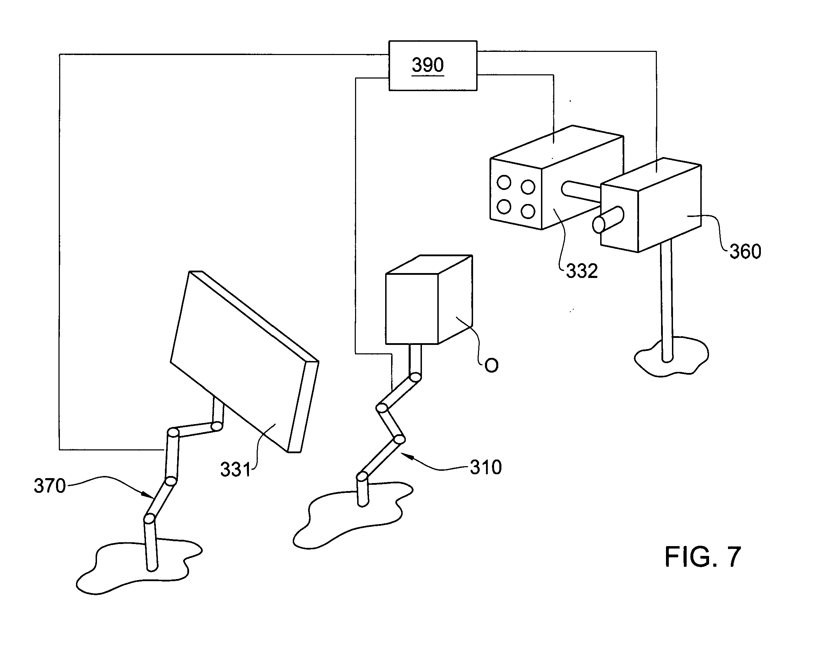

Referring to Fig. 7, for some variations of this embodiment in which the illumination system **320** comprises a light reflecting medium **331** and an illumination source **332** analogous to the components illustrated and disclosed with reference to Figs. 3 and 5 for the first and second embodiments. In the third embodiment the light reflecting medium **331** may be mounted onto the robotic arm **370,** and the illumination source **332** may be mounted to the image capturing device **360,** which is itself statically mounted. In this case, even if the illumination direction from the illumination source is parallel or closely aligned with the optical axis or axes of the image capturing device **360,** the spatial relationship of the reflecting medium and the object **O** with respect to the illumination source **332** and the image capturing device **360,** may be independently controlled such as to provide optimum illumination of the ROI being imaged, in particular edges thereof, while preventing specular reflection towards the image capturing device **360.**

The object **O** is mounted onto said mechanism **310,** which may be similar to the mechanism **210** described for the second embodiment, mutatis mutandis, and thus comprises a robotic arm substantially similar to the robotic arm **170** as described herein for the first embodiment, for example, including all the variations and features thereof, mutatis mutandis. Thus, the mechanism 310 comprises a fixed base **342,** fixedly mounted to a static structure, a mounting bracket **344** or gripper, for reversibly mounting the object **O** thereto, and a plurality of controllable articulated links **346** between the mounting bracket **344** and the base **342,** for providing five or six degrees of movement, or less than five degrees of movement, controlled by controller **390** via control line **349.**

Operation of the system **300** is similar to that of system **100** or system **200,** mutatis mutandis, the main difference being that in the third embodiment part or all of the illumination system and the object may be independently moved, while the image acquisition system remains stationary *mutatis mutandis.*

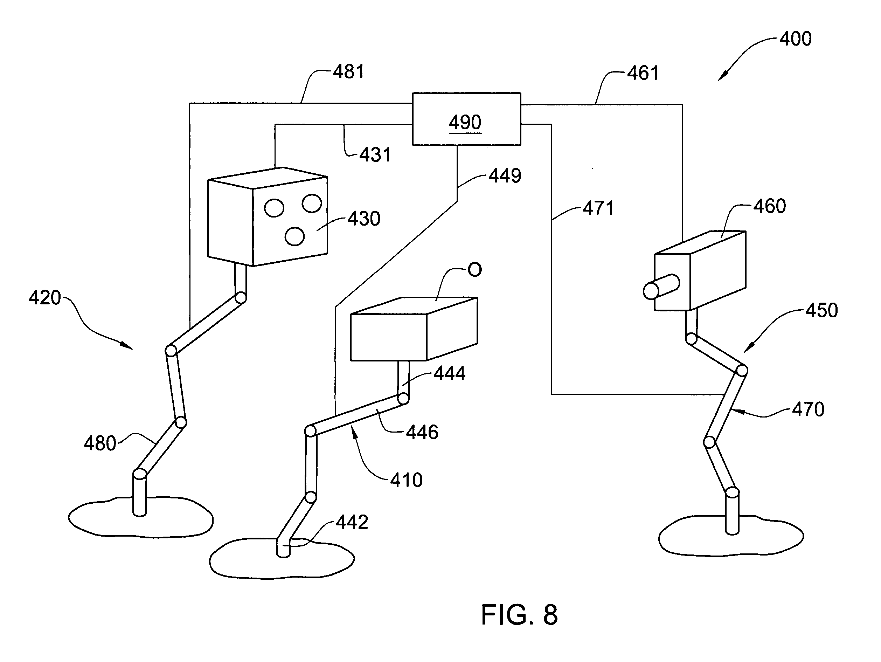

Referring to Fig. **8,** a fourth embodiment of the system for imaging an object **O** and providing dimensional data according to the invention, designated with numeral **400,** comprises all the elements and features of the first, second and third embodiments, and variation thereof, mutatis mutandis, with the following differences. In this embodiment, the system **400** comprises an image acquisition system **450,** an illumination system **420,** and a mechanism **410** for displacing and/or rotating an object **O.**

The image acquisition system **450** comprises all the features as described herein for the image acquisition system **150** or **250** of the first or second embodiments, mutatis mutandis, for example, and thus comprises at least one image capturing device **460** mounted on a robotic arm **470,** similar to the corresponding elements described for the first or second embodiments, mutatis mutandis. The system **400** further comprises controller **490,** similar to the controller **190, 290, 390** described for the first, second or third embodiments, mutatis mutandis, which controls operation of the robotic arm **470** and of the image capturing device **460** via lines **471, 461,** respectively.

The illumination system **420** comprises at least one image illumination unit **430** as described for the image illumination unit **130** or **330** of first or third embodiments, mutatis mutandis, for example, mounted on a robotic arm **480,** similar to the corresponding elements described for the first or third embodiment, *mutatis mutandis.* The controller **490** may also control operation of the robotic arm **480** and of the illumination unit **430** via lines **481, 431,** respectively, or alternatively, different controllers may be provided for each component.

The object **O** is mounted onto said mechanism **410,** which may be similar to the mechanism **210** or **310** described for the second and third embodiments, mutatis mutandis, for example, and thus may comprise a robotic arm substantially similar to the robotic arm **170** as described herein for the first embodiment, for example, including all the variations and features thereof, *mutatis mutandis.* Thus, the mechanism **410** comprises a fixed base **442,** fixedly mounted to a static structure, a mounting bracket **444** or gripper, for reversibly mounting the object **O** thereto, and a plurality of controllable articulated links **446** between the mounting bracket **444** and the base **442,** for providing five or six degrees of movement, or less than five degrees of movement, controlled by controller **490** via control line **449.**

Operation of the system **400** is similar to that of system **100,** or system **200,** or system **300,** the main difference being as follows. While in the first, second and third embodiments, two of the three main elements of the system are movable (the main elements being the illumination system, the image acquisition system, and the object (or the stand onto which the object may be mounted)), while the third main element is static, at least during operation of the corresponding system, the illumination system and the image acquisition system are moved, while the object remains stationary, in the fourth embodiment the illumination system, the image acquisition system and the object may each be moved independently of one another, mutatis mutandis, enabling greater flexibility in operation thereof.

According to a second aspect of the invention, and referring to Fig. 9, a dynamic background device **15** according to one embodiment of the invention is illustrated therein. The dynamic background device **15** may be used for imaging any suitable object O using a suitable illumination system and any suitable image acquisition system. For example, the dynamic background device **15** may be used with the system for imaging an object **O** and providing dimensional data according to any one of the first to fourth embodiments of the invention, disclosed above with respect to the first aspect of the invention, mutatis mutandis, and thus may replace the light reflecting medium **131, 231** or **331** of the first second or third embodiments, respectively, illustrated in Figs. 3, 5 and 7, respectively.

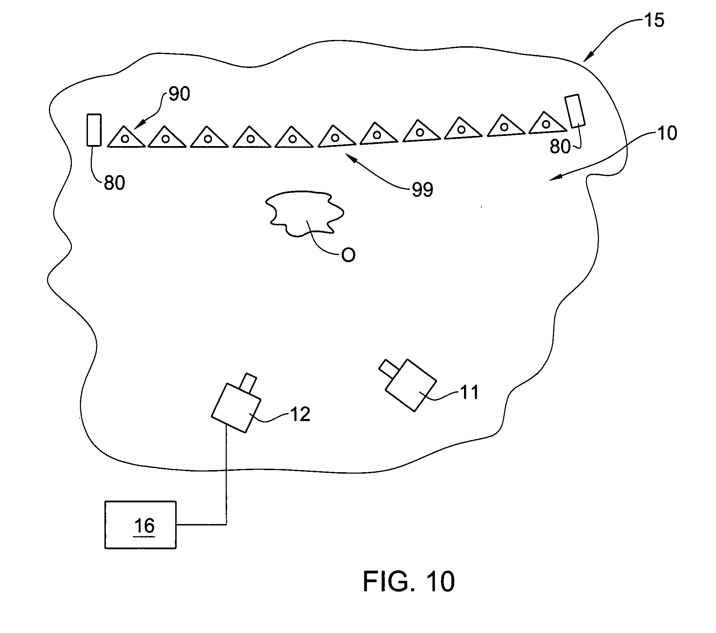

Alternatively, such a background device 15 may be used with any suitable optical system. A generalized example of such an optical system, generally designated with the numeral **10,** is illustrated in Fig. 10, and comprises a suitable illuminating system in the form of at least one illumination source **11,** at least one said dynamic background device **15,** and a suitable image acquisition system in the form of at least one optical image capturing device **12.** While the following description is based on such a generalized system 10, it applies, *mutatis mutandis,* to the system for providing surface data according to any one of the first to fourth embodiments of the invention, disclosed above with respect to the first aspect of the invention, *mutatis mutandis*

The background device **15** is configured for selectively presenting a visually exposed surface comprising one of a number of alternative optical media at a time to face one or more of the object O, illumination source **11,** and optical image capturing device **12.** Each of the alternative media may optionally comprise different light reflection properties, for example: at least one such media may present a substantially monochromatic colored background, optionally that provides a desired contrast with the object O being imaged; at least one such media may comprise a two dimensional image or pattern, for example a company logo; at least one such media may have high reflectivity or gain, particularly relative to the reflectivity or gain of the object O.

In the embodiment illustrated in Figs. 9 and 10, the background device **15** comprises a plurality of rectilinear prismatic elements **90,** each element comprising a substantially uniform transverse cross-section, this being in the form of an equilateral triangle with straight sides, and a longitudinal axis **70** passing through the geometric centre of the transverse cross-sections. Thus, each element **90** comprises three outer facing facets **91, 92, 93,** of substantially equal size and form. The elements **90** are pivotably mounted at with respect to two longitudinally opposed frame elements **82** (only one element **82** shown in Fig. **2)** of a frame member **80,** the elements **90** being arranged with their axes substantially parallel and lying on a common plane. A suitable actuation mechanism (not shown) rotates the elements **90** in a synchronized manner about their respective axes **70,** in one mode of operation, such that at every 120 degrees of rotation, one or another set of facets **91, 92** or **93** are co-aligned and substantially coplanar, and facing the object O, illumination source **11,** and optical image capturing device **12.** The lateral spacing between the elements **90** is such as to permit the elements **90** to rotate about their respective axes **70** while not interfering or colliding one with the other, and at the same time minimizing the gap **72** between adjacent facets of adjacent elements when these facets are coplanarly aligned. The actuation mechanism may comprise, for example, a powered rotational drive, for example a motor, or a linear motor such as a solenoid, for example, mechanically coupled to journals or the like at the longitudinal ends of all the elements **90** via gears, pulleys, chains, levers and so on. Alternatively, the actuation mechanism may be based on pneumatic, hydraulic, magnetic or other electrical actuation, for example. Alternatively, the elements 90 may be individually actuable, but in a synchronized manner, and thus each element 90 comprises a dedicated actuator.

When one set of facets, say facets **91,** are co-planarly aligned, they form a generally continuous planar background surface, collectively referred to as surface **99,** which is effectively perceived as the background surface for the object **O.**

The elements **90** may be substantially identical to one another, or may vary in size and form from one another in any particular said device **15.**

Fig. 9a illustrates a variation of the background device of Fig. 9, wherein rather than the axes **70** being arranged along a single plane (or alternatively a curved surface, for example), the elements **90** are divided into two sets, **90A, 90B,** each set having coplanarly arranged axes **70** along plane **A** or **B,** respectively, (or alternatively along parallel curved surfaces, mutatis mutandis) which are parallel and displaced by a spacing **D** with respect to one another. The elements are arranged such that each element **90A** is interposed between two elements **90B,** and vise versa, except for the elements at each lateral end of the device **15.** Thus, recessed elements **90B** are alternately located with respect to elements **90A** as viewed from the direction of the object. At the same time, the lateral spacing **T** between adjacent elements **90A, 90B** is reduced to less than the width **W** of the facets, so that the edges **96B** of the outwardly facing facets of recessed elements **90B** are overlapped by the edges **96A** of the outwardly facing facets of adjacent elements **90A.** The spacing **t** between adjacent elements **90A** is thus not greater than spacing T. This arrangement avoids gaps between adjacent elements being optically visible from the direction of the object O. The lateral spacing **T** between the elements **90A, 90B,** and spacing **D,** are such as to permit the elements **90** to rotate about their respective axes **70** while not interfering or colliding one with the other, as illustrated in the phantom lines **P** in this figure.

In operation of the optical system 10, an object **O** to be imaged is placed in front of the background device **15,** and arranged such that it is located between the background device **15** and the illumination source **11,** and also between background device **15** and the image capturing device **12.** In particular, the illumination source **11** may be spatially arranged with respect to the object **O** and background device **15,** such that, at least during operation of the system **10,** the object **O,** for example a portion of the surface thereof comprising edges (internal or external), and a part of the background device 15 surrounding the object's edges are illuminated by the source **11.**

Similarly, the image capturing device **12** may be spatially arranged with respect to the object **O** and background device **15,** such that, at least during operation of the system **10,** an image of the object **O,** or at least a portion of the surface, and a part of the background device **15** may be obtained with the image capturing device **12.**

In operation, the illumination source **11** illuminates the object **O** and background device **15,** or at least a portion of the surface of the object **O,** for example including edges thereof of interest, and a part of the background device **15** surrounding the edges, as seen by the image capturing device **12,** and the image capturing device **12** then captures one or more images of the object, possibly including a part of the background device **15.**

The said image capturing device **12** and the illumination source **11** may be similar to the image capturing device **160** and the illumination unit **130** as disclosed with respect to the first aspect of the invention, *mutatis mutandis,* for example.

Suitable image data obtained by the image capturing device **12** may be provided to a suitable microprocessor, and processed in any suitable manner to reconstruct two-dimensional or three dimensional data relating to surfaces and/or edges of the object.

Optionally, the background device **15** may be statically mounted with respect to one or more of the object **O,** illumination source **11,** and optical image capturing device 12. Alternatively, the background device **15** may be movable in a controllable manner with respect to any one or more of the object **O,** illumination source **11,** and optical image capturing device **12,** for example the background device **15** may be mounted to a robotic arm.

The elements **90** may be arranged with respect to the frame member **80** such that the longitudinal axes **70** are vertically or horizontally oriented, or indeed oriented along any desired direction.

Optionally, the background device **15** may be provided as modular unit that is optionally configured for being assembled with other such modules to provide backgrounds of varying sizes as required.

Optionally, the background device **15** may be configured for providing a nonplanar background surface rather than planar surface **99,** for example a concave or convex curved background surface. In such cases, the axes **70** are arranged in parallel formation, but arranged on an arc. Optionally, the sides of the triangular cross-section of the elements **90** may be curved inwards or outwards, and the corresponding facets of the elements **90** may be concavely or convexly contoured to form part of a cylindrical surface.

Optionally, at least one said background surface **99** may optionally comprise a retro-reflective surface, wherein the corresponding facets of the elements **90** may each comprise a retro-reflective layer, while other background surfaces formed by the background device **150** may comprise a reflective surface, a semi reflective surface, a matte surface, for example matte white or matte black, or indeed any other surface.

Optionally, the minimum gain or reflectance provided by at least one background surface **99** of the background device **15** may be related to the gain or reflectance properties of the object O itself. In such a case, the more reflective the object O itself is, the higher the reflectivity or gain of the background surface **99** needs to be in order to provide adequate contrast when viewed by the image capturing device **12.** Thus, the gain or reflectance of the object O, in particularly the edges or the zones or areas of free edges of the object O is substantially lower than the gain or reflectance of the background surface **99.** For example, the object O may have a gain of less than unity and/or reflectance less than about 5%, while the background device **15** may have a gain of unity or greater, including 2, 3, 4, and so on, and/or reflectance of more than 5%, say 10%, 15%, 20%, 30%, 40% and so on. Alternatively, the object may have a gain of 1 or greater than 1, e.g., 1.3, and/or a reflectivity of greater than 5%, say 10%, wherein the background device **15** is chosen having a gain of substantially more than 1.3, say 2 or greater than 2, and/or a reflectivity of substantially more than 10%, say 20% or greater. In other words, the ratio of the background gain G_{M} to the object gain G_{O} may be greater than 1, i.e., the ratio of background reflectance R_{M} to object reflectance R_{O} may be greater than 1. Said differently, for a given radiant flux falling on this background surface **99** and object O, the ratio of radiant flux emitted by this background surface **99** to the radiant flux emitted by the object O (herein referred to as the "radiant flux ratio"), in particular the surface thereof close to an exposed edge of the object O, is greater than 1.

Optionally, the illumination source **11** may be located relatively close to the one or more image capturing devices **12,** and thus illumination light from the illumination source **11** may be captured at relatively high intensity by the image capturing devices **12** after being reflected by a particular background surface **99.**

Alternatively, if the illumination source(s) **11** and the image capturing device(s) are located at significantly spaced spatial positions, such that a retro reflective surface would not reflect most of the light incident on it to the image capturing device(s), then the background surface **99** may be changed by rotating the elements **90** appropriately to align a different set of facets that each comprise a reflective surface that is configured for reflecting a significant portion of the incident light thereon towards the image capturing device(s).

Optionally, and in cases where there are a plurality of image capturing devices **12,** all of which are located in significantly different positions relative to the source **11,** the background surface **99** may be adapted for reflecting the incident light in all the required viewing directions, each defined by the viewing axis of a corresponding image capturing device **12,** so that the background surface **99** is perceived by each device **12** as being highly reflective.

By way of further example, the background device **15** may comprise three sets of facets **91, 92, 93** that selectively provide one or another of a suitable reflective, semi reflective or matte background surfaces, the actual background surface that is used optionally depending on the reflectance of the object O itself or of part thereof. Non-limiting examples of suitable materials for the background device **15** may include the Matte White, High Contrast Matte White, Video Spectra, Glass Beaded, Silver Matte, High Power, and Silver Vision screen fabrics manufactured by Da-Lite (USA); Mocom 20X screens provided by Mocomtech; and so on.

The facets of the prism members **90** may each comprise a rigid planar or nonplanar screen having a suitable retro-reflective, reflective, semi reflective or matte surface or any other suitable background surface on a suitable substrate, for example glass or plastic.

The facets may be made from a material having suitable reflectance properties, and/or comprise a coating having suitable reflectance properties, and/or comprise an outer layer configured such as to exhibit (and/or made from a material having) suitable reflectance properties.

Optionally, it is possible to operate the background device such as to provide a background surface **99** that is a composite of facets **91, 92, 93,** for example such that some elements **90** will be oriented with facets **91** outermost and facing the object/illumination system/image acquisition units, while other elements may have facets **92** outermost, while optionally other elements **90** will have facets **93** outermost. The background surface **99** presented by the background device **15** may thus comprise any desired combination or permutation of the prismatic element facets.

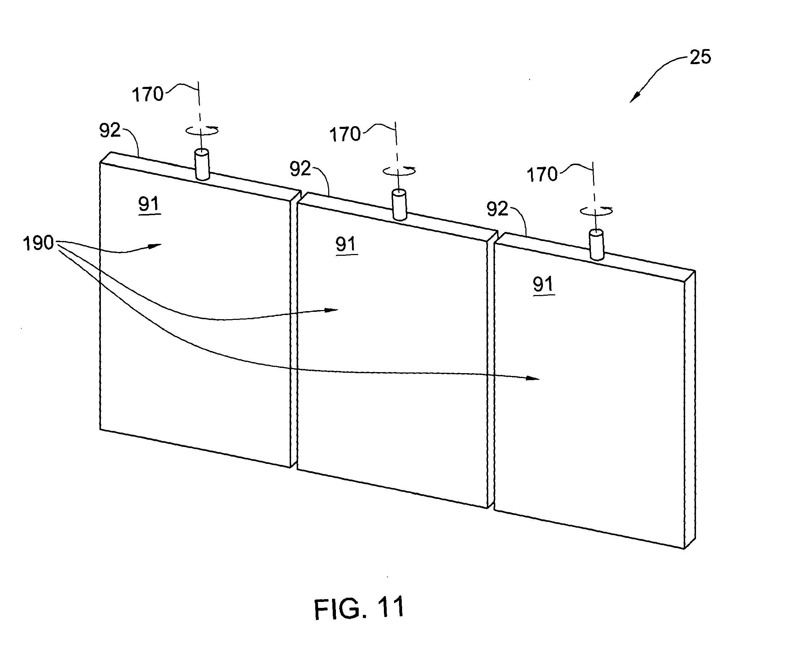

Referring to Fig. 11, the background device according to another embodiment, herein designated 25, comprises all the elements and features of the first embodiment of the background device, *mutatis mutandis,* and may be used in conjunction with an object, illumination system and image acquisition units as described with respect to the embodiments of Figs. 9, 9a and 10, *mutatis mutandis,* with the main difference that in the second embodiment, the triangular prismatic elements **90** may be replaced with substantially flat or curved plate elements **190.** In a variation of this embodiment, the plate elements may be replaced with cylindrical elements, in which half the cylindrical surface comprises one optical medium, and the other half a different optical medium, for example.

The plate elements **190** essentially comprise two facets, **191** and **192,** facing in generally opposite directions, and are pivotably mounted to the frame member (not shown) along axes **170,** enabling the elements **190** to be selectively rotated by 180 degrees to present one or another of facets **191, 192,** and thus together the elements **190** present one of several possible background surfaces for use with an object being imaged.

It should be noted that the word "comprising" as used herein is to be interpreted to mean "including but not limited to".

It should be noted that in the following claims, alphanumeric characters and/or Roman numerals used to designate method steps are provided for convenience only and do not imply any particular order of performing the steps.

While there has been shown and disclosed example embodiments in accordance with the invention, it will be appreciated that many changes may be made therein without departing from the spirit of the invention.

## Claims

1. A system for virtual reconstruction of topographical features of an object, comprising:
an image acquisition system for obtaining image data of at least one region of interest (ROI) of the object comprising said topographical features, said data being configured for enabling virtual reconstruction of said topographical features of said object;
an illumination system for illuminating at least said ROI;
wherein at least two of:
said image acquisition system, said illumination system and said object,
are independently controllably movable in a manner such as to provide a desired illumination to said ROI and to enable the ROI thus illuminated to be imaged in a desired manner; and
data processor for virtually reconstructing said topographical features based on said image data.

2. A system according to claim 1, comprising at least two suitable motion inducing mechanisms, each said motion inducing mechanism being adapted for independently controllably providing at least one of a displacement motion and a rotational motion for a different one of said at least two of said image acquisition system, said illumination system and said object.

3. A system according to claim 1 or claim 2, comprising at least two suitable robotic arms, each said robotic arm being adapted for independently controllably providing at least one of a displacement motion and a rotational motion for a different one of said at least two of said image acquisition system, said illumination system and said object, wherein each said robotic arm comprises a corresponding one of said image acquisition system, said illumination system and said object mounted thereto, and further comprising a suitable controller for controlling the position and orientation of each said robotic arm.

4. A system according to claim 3, wherein said controller is further adapted for controlling operation of at least one of the or each one image capturing device and the or each one image illumination unit.

5. A system according to any one of claims 2 to 4, wherein each said robotic arm provides movement in at least two translational degrees of freedom and/or provides movement in at least two rotational degrees of freedom.

6. A system according to any one of claims 2 to 5, wherein each said robotic arm comprises an operative end thereof configured to move to any point in space within a predetermined geometrical envelope in any suitable manner so as to avoid collision with another component of the system..

7. A system according to any one of claims 1 to 6, wherein said imaging system provides suitable image data on which epipolar, triangulation or any other suitable image-based reconstruction technique may be applied to determine corresponding at least one of surface topography and dimensional data of the object.

8. A system according to any one of claims 1 to 7, wherein said illumination system comprises
a background medium, wherein the medium comprises a reflectance substantially greater than a reflectance of said ROI of the object at least in a vicinity of an edge comprised in said ROI when viewed along at least along an optical axis of said image acquisition system;
the said image acquisition system comprising at least one image capturing device being disposed with respect to said medium such that said ROI including said edge are positioned intermediate between said at least one image capturing device and said medium; and
at least one illumination source for front illuminating at least a portion of said ROI including said edge and at least a portion of said medium proximate to said edge.

9. A system according to claim 8, wherein said medium comprises a retro-reflective layer.

10. A system according to claim 8 or claim 9, wherein:
said background medium is mounted on a controllable suitable motion inducing mechanism adapted for providing movement thereto in a desired number of degrees of freedom; and
said at least one illumination source is mounted on a different controllable suitable motion inducing mechanisms adapted for providing movement thereto in a desired number of degrees of freedom.

11. A system according to claim 8 or claim 9, wherein said background medium and said at least one illumination source are mounted on a common controllable suitable motion inducing mechanism adapted for providing movement thereto in a desired number of degrees of freedom.

12. A system according to claim 8 or claim 9, wherein:
said background medium is mounted on a controllable suitable motion inducing mechanism adapted for providing movement thereto in a desired number of degrees of freedom; and
said at least one illumination source is mounted on said at least one image capturing device.

13. A system according to claim 8 or claim 9, wherein:
said background medium is statically mounted;
said object is mounted on a first controllable suitable motion inducing mechanism adapted for providing movement thereto in a desired number of degrees of freedom;
said at least one image capturing device is mounted on a second controllable suitable motion inducing mechanisms adapted for providing movement thereto in a desired number of degrees of freedom; and
said at least one illumination source is mounted on said at least one image capturing device.

14. A system according to claim 8 or claim 9, wherein:
said background medium and said at least one illumination source are statically mounted with respect to said device and to said image acquisition system.

15. A system according to any one of claims 8 to 14, wherein said background medium comprises visually exposed surface and a plurality of alternative media comprised on actuable elements, wherein said elements may be actuated synchronously to selectively provide one or another of said alternative media on said surface.

16. A system for imaging an object, comprising:
an image acquisition system for obtaining images of at least one region of interest (ROI) of the object;
an illumination system for illuminating at least said ROI;
wherein at least two of:
said image acquisition system, said illumination system and said object
are independently controllably movable in a manner such as to provide a desired illumination to said ROI and to enable the ROI thus illuminated to be imaged in a desired manner.

17. A system according to claim 16, wherein said imaging system is adapted for providing image data configured for enabling virtual reconstruction of topographical features of said object.

18. A system for imaging at least a region of interest (ROI) of an object including an edge, comprising:
a background system having a visually exposed surface,
an image acquisition system comprising at least one image capturing device being disposed with respect to said surface such that said ROI including said edge are positioned intermediate between said at least one image capturing device and said surface;
an illumination system comprising at least one illumination source for front illuminating at least a portion of said ROI including said edge and at least a portion of said visually exposed surface proximate to said edge;
wherein said background system comprises a visually exposed surface selectively constituting one of a plurality of interchangeable background surfaces, wherein each said background surface comprises a plurality of surface elements each of which may be reversibly moved between a first position
wherein the surface element is not comprised on said visually exposed surface, and a second position wherein the surface element is comprised on said visually exposed surface.

19. A background system for an illuminated object to be imaged with respect thereto, comprising a visually exposed surface selectively constituting one of a plurality of interchangeable background surfaces, wherein each said background surface comprises a plurality of surface elements each of which may be reversibly moved between a first position wherein the surface element is not comprised on said visually exposed surface, and a second position wherein the surface element is comprised on said visually exposed surface.

20. A method for imaging an object, comprising:
(a) providing an image acquisition configured for obtaining images of at least one region of interest (ROI) of the object;
(b) providing an illumination system configured for illuminating at least said ROI;
(c) controllably moving at least two of said image acquisition system, said illumination system and said object in a manner such as to provide a desired illumination to said ROI and to enable the ROI thus illuminated to be imaged from a desired direction with respect thereto;
(d) providing said desired illumination and imaging said ROI thus illuminated to provide image data.

21. A method according to claim 20, wherein step (c) comprises providing movement in at least two translational degrees of freedom.

22. A method according to claim 20 or claim 21, wherein step (c) comprises providing movement in at least two rotational degrees of freedom.

23. A method according to any one of claims 20 to 22, further comprising the step of virtually reconstructing topographical features of said ROI based on said image data.

24. A method for virtual reconstruction of topographical features of an object, comprising imaging the object according to the method of any one of claims 20 to 23, and further comprising the step of virtually reconstructing topographical features of said ROI based on said image data.
